# EUROPÄISCHE PATENTSCHRIFT

(11) **EP 1 399 350 B1**
(45) Veröffentlichungstag und Bekanntmachung des Hinweises auf die Patenterteilung: **21.12.2005**
(21) Anmeldenummer: 02754621.7
(22) Anmeldetag: 05.06.2002
(51) Int. Cl.: B62D 5/083, F16K 17/04

(54) **HILFSKRAFTLENKUNG FÜR KRAFTFAHRZEUGE**
POWER STEERING SYSTEM FOR MOTOR VEHICLES
DIRECTION ASSISTEE POUR VEHICULE A MOTEUR

(30) Priorität: 27.06.2001 DE 10131077
(43) Veröffentlichungstag der Anmeldung: 24.03.2004
(73) Patentinhaber: ZF Lenksysteme GmbH, 73527 Schwäbisch Gmünd (DE)
(72) Erfinder: ERTLE, Peter, 73568 Durlangen (DE); SCHUSTER, Markus, 73525 Schwäbisch Gmünd (DE); SAUTER, Dieter, 73540 Heubach (DE)
(86) Internationale Anmeldenummer: PCT/EP2002/006118
(87) Internationale Veröffentlichungsnummer: WO 2003/002396

(56) Entgegenhaltungen:
- DE-A- 4 220 624

## Beschreibung

Die Erfindung betrifft eine Hilfskraftlenkung für Kraftfahrzeuge mit einem Drehschieberventil, das einen Rückwirkkolben aufweist, der einen aktiven und passiven Rückwirkraum abgrenzt, gemäß dem Oberbegriff von Anspruch 1.

Eine gattungsgemäße Hilfskraftlenkung ist aus der DE 197 47 639 A1 bekannt.

Die gattungsgemäße Offenlegungsschrift weist dabei ein Drehschieberventil mit einem Drehschieber auf, wobei zwischen dem Drehschieber und einem Ventil-Ausgangsglied eine Zentriereinrichtung angeordnet ist, die zwei gegeneinander verdrehbare Zentrierelemente enthält und wenigstens einen zwischen den beiden Zentrierelementen liegenden Wälzkörper. Dabei ist das eine Zentrierelemente mit einem Rückwirkkolben fest und mit dem Ventil-Ausgangsglied über einen Metallfaltenbalg unverdrehbar, jedoch axial verschiebbar, verbunden. Das andere Zentrierelement ist mit dem Drehschieber unverdrehbar und unverschiebbar verbunden. Der Rückwirkkolben ist im Bereich der Zentriereinrichtung radial außerhalb des Drehschiebers um diesen herum angeordnet und ragt in axialer Richtung in den Bereich des Drehschiebers vor. Der Rückwirkkolben ist sowohl auf dem Ventil-Ausgangsglied als auch in einem Ventilgehäuse dichtend geführt. Er grenzt damit einen aktiven und einen passiven Rückwirkraum ab, wobei dem aktiven Rückwirkraum ein lenkkraftabhängiger Servodruck über eine Leitung zugeführt werden kann. Der Servodruck kann in bekannter Weise durch einen elektrohydraulischen Wandler in Abhängigkeit von der Fahrgeschwindigkeit oder von anderen Parametern beeinflußt werden. Dabei kann der Rückwirkraum den Metallfaltenbalg enthalten oder in einem Raum ausgebildet sein, der dem Metallfaltenbalg in Bezug auf den Rückwirkkolben gegenüberliegt. Im letzteren Fall wirkt der Rückwirkkolben der Kraft des Metallfaltenbalgs entgegen. Der Metallfaltenbalg weist eine relativ starke Vorspannung auf, die beim Anlegen durch die Druckbeaufschlagung mit dem Rückwirkdruck entlastet wird.

Zum weiteren Stand der Technik, bezüglich der Wirkungsweise von Rückwirkkolben, wird ferner auf die DE 197 40 352 A1 verwiesen.

Durch den Rückwirkkolben bzw. den Differenzdruck zwischen aktivem und passivem Rückwirkraum, der auf den Rückwirkkolben wirkt, ergibt sich ein gezielter Druck, der durch eine entsprechende Rückwirkung auf die Lenkhandhabe zu einem vorteilhaften Lenkgefühl abhängig von verschiedenen Parametern, insbesondere der Fahrgeschwindigkeit, führt. Dies wird durch eine entsprechende Erhöhung des Lenkmoments erzielt.

Eine derartige Rückwirkung bzw. die Erhöhung des Lenkmoments ist jedoch nur bei statischen bzw. gesteuerten Vorgängen erwünscht. Bei ungewollten Einflüssen, beispielsweise durch Fahrbahnschläge, eingeleitete Störungen oder in bestimmten Fahrzuständen, können dynamische Vorgänge auftreten, die eine Druckschwankung im Rückwirkraum auslösen, welche sich an der Lenkhandhabe als unerwünschte Momentenschwankung auswirkt. Die bei starker Oszillation des Differenzdruckes erhöhte Stößigkeit führt folglich zu merkbaren Komforteinbußen, d.h. zu Drehmomentstößen am Lenkrad. Der Differenzdruck oszilliert besonders dann stark, wenn einer der beiden Rückwirkdrücke stark oszilliert oder wenn die beiden Rückwirkdrücke in Gegenphase geraten.

Der vorliegenden Erfindung liegt daher die Aufgabe zugrunde, eine Hilfskraftlenkung der eingangs beschriebenen Art derart zu verbessern, daß unerwünschte dynamische Vorgänge bzw. eingeleitete Störungen keine Komforteinbußen, insbesondere keine Drehmomentstöße am Lenkrad, verursachen, und daß diese Verbesserung möglichst seriennah, einfach und kostengünstig realisierbar ist.

Erfindungsgemäß wird diese Aufgabe dadurch gelöst, daß an dem aktiven Rückwirkraum zur Aufnahme von dynamischen Oszillationen des Rückwirkdrucks ein Dämpfungskolben angeschlossen ist.

Erfindungsgemäß wird diese Aufgabe auch durch die in Anspruch 10, Anspruch 11 und Anspruch 14 beschriebene Hilfskraftlenkung gelöst.

Dadurch, daß an dem aktiven Rückwirkraum ein Dämpfungskolben angeschlossen ist, werden starke Oszillationen zwischen den Rückwirkdrücken des aktiven und passiven Rückwirkraumes vermieden. Die Oszillationen im Differenzdruck wirken sich durch den Einsatz eines Dämpfungskolbens nicht ausschließlich auf der Fläche des Rückwirkkolbens aus, sondern werden von dem Dämpfungskolben aufgenommen. Die erhöhte Stößigkeit bei Schnellfahrzuständen mit bestimmter Spurstangenvorlast und eingeleiteten Störungen führt, wie sich in Versuchen gezeigt hat, nicht mehr zu Drehmomentstößen am Lenkrad. Der Dämpfungskolben dient praktisch als weicher Druckspeicher, der dynamische Druckschwankungen aufnimmt, jedoch bei konstanten Druckverhältnissen entsprechend einschwingt. Auftretende dynamische Druckspitzen werden somit nicht direkt in mechanische Kraft umgesetzt, sondern durch die aus dem Dämpfungskolben resultierende Volumenänderung aufgenommen.

Durch den am aktiven Rückwirkraum angeschlossenen Dämpfungskolben wird die Druckamplitude im aktiven Rückwirkraum spürbar gesenkt.

Von Vorteil ist es, wenn die vom aktiven Rückwirkraum abgewandte Seite des Dämpfungskolbens gegen Atmosphäre und/oder eine Feder gespannt ist und der Dämpfungskolben als Komplettpatrone ausgebildet und auf Rückwirkraumdruckspitzen abgestimmt ist.

Eine derartige Ausgestaltung, bei der die vom Rückwirkraum abgewandte Seite des Dämpfungskolbens gegen Atmosphäre und/oder eine Feder gespannt ist, hat sich als kostengünstig und einfach zu realisieren herausgestellt. Eine Ausbildung des Dämpfungskolbens als Komplettpatrone stellt hierbei ebenfalls eine vorteilhafte und einfach zu realisierende Maßnahme zur Senkung der auftretenden Druckspitzen dar.

In vorteilhafter Weise verhindert der Einsatz einer Komplettpatrone bzw. eines geschlossenen Systems, daß Probleme durch Verschmutzung oder andere äußerer Einflüsse auftreten.

In einer alternativen Ausgestaltung und Weiterbildung der Erfindung kann ferner vorgesehen sein, daß die vom aktiven Rückwirkraum abgewandte Seite des Dämpfungskolbens mit dem passiven Rückwirkraum verbunden ist.

Zusätzlich zu der Vermeidung von starken Oszillationen der einzelnen Rückwirkdrücke und dem Effekt, daß die Oszillationen im Differenzdruck nicht ausschließlich auf die Fläche des Rückwirkkolbens wirken, sondern von dem Dämpfungskolben aufgenommen werden, ermöglicht eine Verbindung zu dem passiven Rückwirkraum, daß die beiden Rückwirkdrücke in Phase bleiben. Die Phasenlage des Drucks im aktiven Rückwirkraum ist somit nahezu gleich wie die im passiven Rückwirkraum. In vorteilhafter Weise läßt sich eine derartige Ausbildung des Dämpfungskolbens auch als Komplettpatrone, mit einer Feder-Kolben-Kombination, abgestimmt auf Rückwirkraumdruckspitzen, ausgestalten. Der Kolben kann dabei gedämpft werden oder vorzugsweise leichtgängig ausgeführt sein. Denkbar ist hierbei auch eine Feder-Massen-Abstimmung auf Dynamik.

Von Vorteil ist es, wenn der Dämpfungskolben mit den Funktionen eines Abschneidventils bzw. eines Druckbegrenzungsventils versehen ist.

Die Ergänzung des Dämpfungskolbens durch die Funktionen eines serienmäßigen Abschneidventils ermöglicht eine Teilereduzierung und somit eine besonders günstige Herstellung. Um die Funktion des Abschneidventiles in einer Kombination mit dem Dämpfungskolben gewährleisten zu können, müssen Drosselbohrungen, Steuer- und Dichtkanten proportional der geringeren Federsteifigkeit der Feder des Dämpfungskolbens in entsprechender Position integriert sein. Der Dämpfungskolben wird somit derart ausgestaltet, daß ab einem gewünschten Punkt auf der Strecke des Dämpfungskolbens ein Überdruckabbau erfolgt. In dem Bereich unterhalb dieses Überdruckabbaus arbeitet der Dämpfungskolben in der bereits beschriebenen vorteilhaften Weise.

Vorteilhafte Ausgestaltungen und Weiterbildungen der Erfindung ergeben sich aus den weiteren Unteransprüchen und aus den nachfolgend anhand der Zeichnung prinzipmäßig aufgeführten Ausführungsbeispielen.

Es zeigt:
- Fig. 1: eine schematische Darstellung eines Rückwirkkolbens mit aktivem und passivem Rückwirkraum und einem Dämpfungskolben in einer ersten Ausführungsform;
- Fig. 2: eine schematische Darstellung eines Rückwirkkolbens mit aktivem und passivem Rückwirkraum und einem Dämpfungskolben in einer zweiten Ausführungsform;
- Fig. 3: eine schematische Darstellung eines Rückwirkkolbens mit aktivem und passivem Rückwirkraum mit einem Zentrierstück und einem Entkopplungsglied; und
- Fig. 4: ein Abschneidventil das mit einem erfindungsgemäßen Dämpfungskolben versehen ist.

Die erfindungsgemäße Hilfskraftlenkung für Kraftfahrzeuge mit einem Drehschieberventil weist einen prinzipiell bekannten Aufbau, wie er beispielsweise in der DE 197 40 352 A1 und der DE 197 47 639 A1 beschrieben ist, auf, weshalb nachfolgend auf eine nähere Beschreibung verzichtet wird. Nachfolgend wird daher lediglich auf die erfindungsrelevanten Merkmale näher eingegangen.

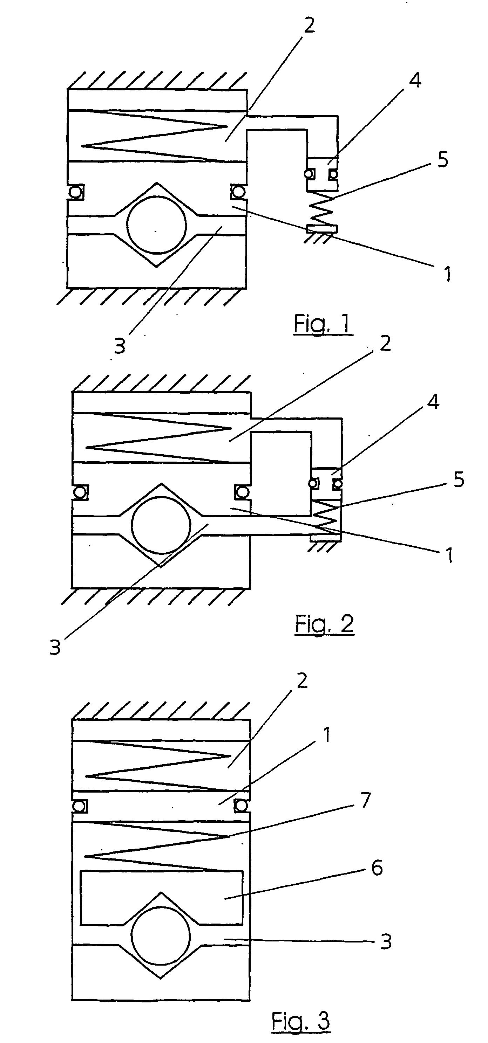

Fig. 1 zeigt einen Rückwirkkolben 1 einer nicht dargestellten Hilfskraftlenkung für Kraftfahrzeuge, der einen aktiven Rückwirkraum 2 und einen passiven Rückwirkraum 3 abgrenzt. In bekannter und daher nicht näher beschriebener Weise kann dem aktiven Rückwirkraum 2 zur Änderung einer Betätigungskraft an einer nicht dargestellten Lenkhandhabe ein Servodruck zugeführt werden.

Zur Aufnahme von dynamischen Oszillationen bzw. zur Vermeidung von starken Oszillationen der einzelnen Rückwirkdrücke ist an den aktiven Rückwirkraum 2 ein Dämpfungskolben 4 angeschlossen. Wie aus Fig. 1 ersichtlich, dient der Dämpfungskolben 4 als Druckspeicher, der dynamische Anregungen aufnehmen kann und eine Volumenänderung ermöglicht. Die Oszillationen wirken somit nicht mehr ausschließlich auf die Fläche des Rückwirkkolbens 1, sondern werden hauptsächlich von dem Dämpfungskolben 4 aufgenommen. Die durch Drehmomentstöße am Lenkrad zu Komforteinbußen führende Stößigkeit wird somit deutlich reduziert bzw. ist für den Fahrer nicht mehr spürbar.

Wie ebenfalls aus Fig. 1 ersichtlich, ist die vom aktiven Rückwirkraum 2 abgewandte Seite des Dämpfungskolbens 4 gegen eine Feder 5 gespannt. Alternativ dazu kann die vom aktiven Rückwirkraum 2 abgewandte Seite des Dämpfungskolbens 4 auch gegen Atmosphäre gespannt sein. Die Feder 5 ist in vorteilhafter Weise derart eingestellt, daß sich der Dämpfungskolben 4 bei konstanten Druckverhältnissen einschwingt und bei einem Auftreten von dynamischen Schwankungen schnell auf diese reagiert und eine entsprechende Volumenänderung ermöglicht. Der Dämpfungskolben 4 kann gedämpft und/oder leichtgängig ausgebildet sein.

In Versuchen bzw. Berechnungen hat sich herausgestellt, daß sich eine Ausgestaltung der Feder 5 als besonders weiche Feder mit einer Federsteifigkeit zwischen 0,2 bis 2 N/mm zur Aufnahme von dynamischen Oszillationen in vorteilhafter Weise eignet.

Eine Ausbildung des Dämpfungskolbens 4 als Komplettpatrone hat sich bezüglich einer Serienfertigung und einer Ausbildung als geschlossenes System, das insbesondere von Verschmutzungen oder sonstigen äußeren Einflüssen abgeschirmt ist, als besonders geeignet herausgestellt. Der Dämpfungskolben 4 kann dabei auf Rückwirkraumdruckspitzen abgestimmt sein. Denkbar ist hierfür eine Feder-Masse-Abstimmung auf Dynamik.

Fig. 2 zeigt eine alternative Ausgestaltung, die sich von der in Fig. 1 beschriebenen Ausgestaltung dadurch unterscheidet, daß der Dämpfungskolben 4 mittels seiner vom aktiven Rückwirkraum 2 abgewandten Seite mit dem passiven Rückwirkraum 3 verbunden ist. In vorteilhafter Weise entspricht dadurch die Phasenlage des Drucks im aktiven Rückwirkraum 2 nahezu der Phasenlage des Drucks im passiven Rückwirkraum 3. Der Aufbau des Dämpfungskolbens 4, insbesondere auch als Komplettpatrone, mit Feder-Kolben-Kombination, abgestimmt auf Rückwirkraumdruckspitzen, kann analog zu der in Fig. 1 beschriebenen Ausführungsform erfolgen.

Der in Fig. 2 schematisch dargestellte Dämpfungskolben 4 kann in einer alternativen und vorteilhaften Ausgestaltung mit den Funktionen eines Abschneidventils bzw. eines Druckbegrenzungsventils, das den Abbau eines definierten Überdrucks ermöglicht, versehen sein. Abschneidventile bzw. Druckbegrenzungsventile, die die Funktion eines Überdruckventiles realisieren, sind bezüglich ihrer Funktionen prinzipiell bereits bekannt, weshalb nachfolgend auf diese nicht näher eingegangen wird. Eine Integration der Funktion eines Abschneidventils ermöglicht in vorteilhafter Weise eine Teilereduzierung und somit eine besonders kostengünstige und seriennahe Ausgestaltung.

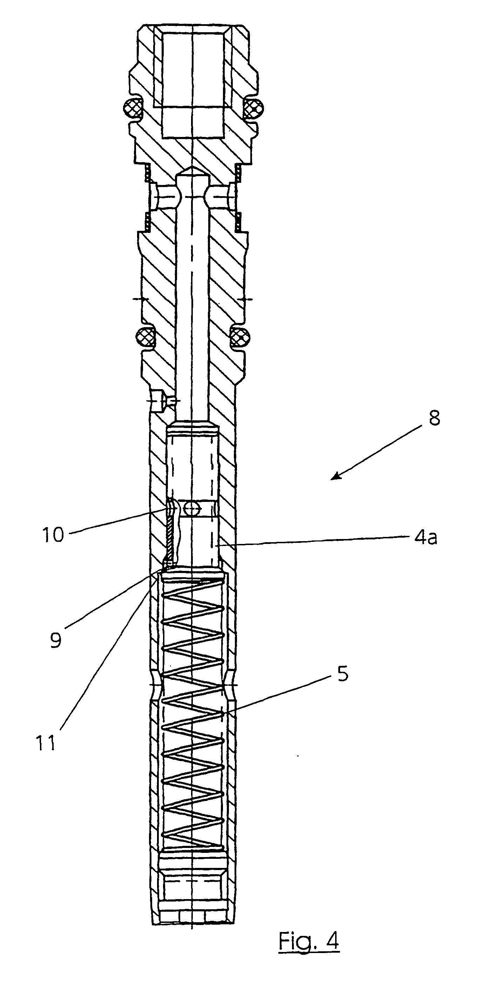

Der prinzipielle Aufbau eines Abschneidventils das mit einem Dämpfungskolben 4 bzw. der erfindungsgemäßen Lösung versehen ist, ist in Fig. 4 näher dargestellt. Dabei ist zu beachten, daß die Feder 5 als besonders weiche Feder mit der bereits näher definierten Federsteifigkeit ausgebildet ist, so daß die bereits beschriebene Funktion des Dämpfungskolbens 4 auf einer relativ langen Wegstrecke, mit der erforderlichen Reaktionszeit auf dynamische Vorgänge, möglich ist, und erst ab einem definierten Überdruck, d.h. einer bestimmten Position des Dämpfungskolbens 4, der gewünschte Überdruckabbau erfolgt. In bekannter Weise muß an dieser Stelle eine entsprechende Überdrucköffnung, die in Fig. 4 näher beschrieben wird, angeordnet sein.

Fig. 3 zeigt einen Rückwirkkolben 1, bei dem die bekannten Funktionen "Zentrierung" und "Kolben" entkoppelt sind. Hierzu ist ein Zentrierstück 6 im passiven Rückwirkraum 3 angeordnet und mittels einem Entkopplungsglied 7 mit dem Rückwirkkolben 1 verbunden. In dem dargestellten Ausführungsbeispiel ist das Entkopplungsglied als Entkopplungsfeder 7 ausgebildet. Das Zentrierstück 6 ist in vorteilhafter Weise schwimmend in dem Rückwirkraum 3 angeordnet. Die in Fig. 3 dargestellte alternative Lösung vermeidet ebenfalls eine zu starke Oszillation der einzelnen Rückwirkdrücke und ermöglicht, daß die Rückwirkdrücke in Phase bleiben.

In einer weiteren alternativen, nicht dargestellten Ausführungsform kann auch vorgesehen sein, daß der Rückwirkkolben 1 eine Membran aufweist, die zwischen dem aktiven Rückwirkraum 2 und dem passiven Rückwirkraum 3 angeordnet ist. Damit wird die Funktionsweise der bereits in Fig. 2 beschriebenen Ausführungsform analog erreicht, wobei auf den Einsatz eines Dämpfungskolbens 4 verzichtet werden kann.

Fig. 4 zeigt ein Abschneidventil 8, das mit den Funktionen des Dämpfungskolbens 4 versehen ist. Hierzu weist das Abschneidventil 8 entsprechende Drosselbohrungen 9, 10 und Steuer- und Dichtkanten 11 auf. Die Drosselbohrungen 9, 10 bzw. die Steuer- und Dichtkanten 11 müssen dabei an die geringe Festigkeit bzw. die besonders weiche Feder 5 bezüglich ihrer Position angepaßt sein.

Fig. 4 zeigt sowohl einen Dämpfungskolben 4, der mit den Funktionen eines serienmäßigen Abschneidventiles 8 bzw. Druckbegrenzungsventiles versehen ist, als auch ein serienmäßiges Abschneidventil 8 bzw. Druckbegrenzungsventil, das mit einer weichen Feder 5 derart versehen ist, daß ein Kolben 4a des Abschneidventils 8 bzw. des Druckbegrenzungsventils annähernd verzögerungsfrei auf dynamische Oszillationen der Rückwirkraumdrücke reagiert. Eine Ausbildung eines serienmäßigen Abschneidventiles 8 mit einer derart weichen Feder 5, daß ein Kolben 4a des Abschneidventils 8 nahezu verzögerungsfrei auf die bereits beschriebenen dynamischen Oszillationen reagiert und somit die bereits beschriebene Funktion eines Dämpfungskolbens 4 übernimmt, läßt sich serienmäßig in besonders vorteilhafter Weise und mit geringem Aufwand realisieren. Eine derartige Ausgestaltung eines Abschneidventils 8 widerspricht der bislang in der Fachwelt vorherrschenden Meinung. Ein Einsatz von weichen Federn 5 bringt für die Funktion eines Abschneidventiles 8 Nachteile bezüglich des Einsatzes bzw. der Montage der Feder in das Abschneidventil 8, da weiche und somit entsprechend lange Federn 5 schwer zu handhaben sind und darüber hinaus gestaucht bzw. vorgespannt werden müssen. Die bislang bei Abschneidventilen 8 eingesetzten Federn 5 weisen daher im allgemeinen eine Federsteifigkeit von ungefähr 12 N/mm auf. Auch bezüglich des Einbauraumes ist eine Feder mit einer hohen Federsteifigkeit vorteilhaft, da somit die vom Kolben 4a zurückzulegenden Wege geringer sind. Ein möglichst geringer Weg von einer Nullstellung des Kolbens 4a bis zu einer Position, in der die Steuer- und Dichtkante 11 öffnet, wird in der Fachwelt als vorteilhaft angesehen. Im Unterschied dazu wird bezüglich der erfindungsgemäßen Lösung ein serienmäßiges Abschneidventil 8 bzw. Druckbegrenzungsventil durch den Einsatz einer weichen Feder 5 derart modifiziert, daß dynamische Oszillationen der Rückwirkraumdrücke aufgenommen werden können. Hierzu müssen die Drosselbohrungen 9, 10 sowie die Steuer- und Dichtkanten 11 entsprechend der wesentlich geringeren Festigkeit der Feder 5 angeordnet werden. Die Feder 5 weist hierzu eine Federsteifigkeit von 0,1 bis 2 N/mm, vorzugsweise 0,4 bis 0,6 N/mm, auf.

Wie bereits erwähnt, stellt das in Fig. 4 dargestellte Ausführungsbeispiel ein serienmäßiges Abschneidventils dar, daß mit dem erfindungsgemäßen Gedanken zur Unterdrückung von dynamischen Störungen versehen ist. Prinzipiell ist das dargestellte Abschneidventil 8 jedoch baugleich mit einem Dämpfungskolben 4a, der mit den Funktionen eines Abschneidventils versehen ist. Durch die Zusammenlegung der beiden Funktionen läßt sich der erfindungsgemäße Gedanke zur Unterdrückung von dynamischen Oszillationen bzw. zur Reduzierung der Stößigkeit, die zu Drehmomentstößen an der Lenkhandhabe führt, kostengünstig realisieren.

Das in Fig. 4 dargestellte Abschneidventil 8 entspricht prinzipiell dem Aufbau eines bekannten Abschneidventils bzw. Druckbegrenzungsventils, weshalb nachfolgend nur auf die erfindungsrelevanten Merkmale bzw. die notwendigen Änderungen, wie die Lage der Drosselbohrungen 9, 10 bzw. der Steuer- und Dichtkanten 11, näher eingegangen wird.

Zur Stößigkeitsreduzierung wird eine abgestimmte Öffnungsquerschnittsänderung über die Steuerkanten 11 bzw. die Federsteifigkeit gegenüber einer Volumenänderung eingesetzt. Es ist jedoch auch eine Kombination beider Arbeitsweisen möglich. Im Unterschied zu einem serienmäßigen Abschneidventil 8 sind die Drosselbohrungen 9, 10 bzw. die Steuer- und Dichtkanten 11 derart angeordnet, daß zu einem vollständigen Öffnen der Überdruckfunktion ein an die geringere Festigkeit der Feder 5 angepaßter längerer Weg des Kolbens 4a erforderlich ist. Dabei kann erfindungsgemäß vorgesehen sein, daß die Feder 5 gegen einen ersten Öffnungsdruck vorgespannt ist. Das hat zur Folge, daß der Kolben 4a erst ab einem bestimmten Druck abgehoben wird. Bei einem Abheben des Kolbens 4 bzw. bei einer Bewegung des Kolbens 4a in Richtung auf die Feder 5 wirkt zunächst die kleinere Drosselbohrung 9. Erst bei einer weiteren Erhöhung des Drucks wirkt die große Drosselbohrung 10. In bekannter Weise wirken die Drosselbohrungen 9, 10 dabei bei Erreichen der Steuer- und Dichtkanten 11.

Wie aus Fig. 4 ersichtlich, wird bei einem Auftreten einer Druckspitze der Öffnungsquerschnitt vergrößert, so daß sich die Druckspitze abbauen kann. Daraus ergibt sich eine entsprechende Volumenstromänderung.

In dem dargestellten Ausführungsbeispiel kann vorgesehen sein, daß die Feder 5 gegen einen Öffnungsdruck von 3 bar vorgespannt ist. Beim Auftreten eines Drucks größer 3 bar, z.B. 4 oder 5 bar, durchläuft der Kolben 4a, im Vergleich zu den bisher bekannten Abschneidventilen, einen größeren Weg. Dadurch öffnen sich die Querschnitte schneller und größer, wodurch sich die dynamischen Druckspitzen entsprechend abbauen. Mit der in Fig. 4 dargestellten Lösung können zwar geringe Druckspitzen, beispielsweise unter 3 bar, aufgrund der Vorspannung der Feder 5 nicht abgefangen werden, wie sich jedoch in Versuchen herausgestellt hat, liegen die die Stößigkeit auslösenden Druckspitzen hauptsächlich im Bereich von 5 bis 10 bar, insbesondere im Bereich von 6 bis 7 bar, in dem mittels dem in Fig. 4 dargestellten Kolben 4a bzw. der Feder 5 ein vorteilhafter Druckspitzenabbau möglich ist.

Zur Umsetzung der in Fig. 4 dargestellten Lösung ist auch die Erkenntnis wesentlich, daß die auftretenden Druckspitzen nur sehr kurz wirken, so daß eine Reaktion von herkömmlich eingesetzten Federn 5 hierauf praktisch nicht erfolgt ist. Im Unterschied zu bekannten Abschneidventilen muß folglich der Abstand zwischen der Drosselbohrung 9 und der Drosselbohrung 10 wesentlich größer sein. Das erfindungsgemäße Abschneidventil 8 kann durch die Wahl der Vorspannung der Feder 5 bzw. den Abstand zwischen den Drosselbohrungen 9, 10 derart ausgelegt werden, daß der Druck bei dem das Abschneidventil 8 erstmals öffnet und der Druck bei dem die Überdruckfunktion einsetzt mit einem herkömmlichen Abschneidventil identisch ist. Der Unterschied besteht dabei lediglich in der weicheren Feder 5 und den entsprechend versetzt angeordneten Drosselbohrungen 9, 10.

### Bezugszeichen

- 1: Rückwirkkolben
- 2: Rückwirkraum (aktiv)
- 3: Rückwirkraum (passiv)
- 4: Dämpfungskolben
- 5: Feder
- 6: Zentrierstück
- 7: Entkopplungsglied, Entkopplungsfeder
- 8: kleine Drosselbohrung
- 9: große Drosselbohrung
- 10: Steuer- und Dichtkanten

## Patentansprüche

1. Hilfskraftlenkung für Kraftfahrzeuge mit einem Drehschieberventil, das einen Rückwirkkolben (1) aufweist, der einen aktiven und passiven Rückwirkraum (2 ,3) abgrenzt, wobei dem aktiven Rückwirkraum (2) zur Änderung einer Betätigungskraft an der Lenkhandhabe ein Servodruck zuführbar ist,
**dadurch gekennzeichnet, daß**
an dem aktiven Rückwirkraum (2) zur Aufnahme von dynamischen Oszillationen des Rückwirkdrucks ein Dämpfungskolben (4) angeschlossen ist.

2. Hilfskraftlenkung nach Anspruch 1,
**dadurch gekennzeichnet, daß**
die vom aktiven Rückwirkraum (2) abgewandte Seite des Dämpfungskolbens (4) gegen Atmosphäre und/oder eine Feder (5) gespannt ist.

3. Hilfskraftlenkung nach Anspruch 1 oder 2,
**dadurch gekennzeichnet, daß**
der Dämpfungskolben (4) gedämpft und/oder leichtgängig ausgebildet ist.

4. Hilfskraftlenkung nach Anspruch 1, 2 oder 3,
**dadurch gekennzeichnet, daß**
der Dämpfungskolben (4) als Komplettpatrone ausgebildet und auf Rückwirkraumdruckspitzen abgestimmt ist.

5. Hilfskraftlenkung nach einem der Ansprüche 1 bis 4,
**dadurch gekennzeichnet, daß**
die vom aktiven Rückwirkraum (2) abgewandte Seite des Dämpfungskolbens (4) mit dem passiven Rückwirkraum (3) verbunden ist.

6. Hilfskraftlenkung nach einem der Ansprüche 1 bis 5,
**dadurch gekennzeichnet, daß**
der Dämpfungskolben (4) eine weiche Feder (5) aufweist, deren Federsteifigkeit vorzugsweise zwischen 0,1 bis 2 N/mm beträgt.

7. Hilfskraftlenkung nach einem der Ansprüche 1 bis 6,
**dadurch gekennzeichnet, daß**
der Dämpfungskolben (4) mit den Funktionen eines Abschneidventils (8) bzw. eines Druckbegrenzungsventils versehen ist.

8. Hilfskraftlenkung nach Anspruch 7,
**dadurch gekennzeichnet, daß**
der Dämpfungskolben (4) Drosselbohrungen (9,10) sowie Steuer- und Dichtkanten (11) entsprechend den Funktionen eines Abschneidventils (8) aufweist.

9. Hilfskraftlenkung nach Anspruch 8,
**dadurch gekennzeichnet, daß**
die Drosselbohrung (9,10) sowie die Steuer- und Dichtkanten (11) entsprechend der geringen Festigkeit der Feder (5) angeordnet sind.

10. Hilfskraftlenkung für Kraftfahrzeuge mit einem Drehschieberventil, das einen Rückwirkkolben (1) aufweist, der einen aktiven und passiven Rückwirkraum (2, 3) abgrenzt, wobei dem aktiven Rückwirkraum (2) zur Änderung einer Betätigungskraft an der Lenkhandhabe ein Servodruck zuführbar ist,
**dadurch gekennzeichnet, daß**
der Rückwirkkolben (1) eine Membran aufweist, die zwischen dem aktiven Rückwirkraum (2) und dem passiven Rückwirkraum (3) angeordnet ist.

11. Hilfskraftlenkung für Kraftfahrzeuge mit einem Drehschieberventil, das einen Rückwirkkolben (1) aufweist, der einen aktiven und passiven Rückwirkraum (2, 3) abgrenzt, wobei dem aktiven Rückwirkraum (2) zur Änderung einer Betätigungskraft an der Lenkhandhabe ein Servodruck zuführbar ist,
**dadurch gekennzeichnet, daß**
ein Zentrierstück (6) im passiven Rückwirkraum (3) angeordnet und mittels einem Entkopplungsglied (7) mit dem Rückwirkkolben (1) verbunden ist.

12. Hilfskraftlenkung nach Anspruch 11,
**dadurch gekennzeichnet, daß**
das Entkopplungsglied als Entkopplungsfeder (7) ausgebildet ist.

13. Hilfskraftlenkung nach Anspruch 11 oder 12,
**dadurch gekennzeichnet, daß**
das Zentrierstück (6) in dem passiven Rückwirkraum (3) schwimmend angeordnet ist.

14. Hilfskraftlenkung für Kraftfahrzeuge mit einem Drehschieberventil, das einen Rückwirkkolben (1) aufweist, der einen aktiven und passiven Rückwirkraum (2, 3) abgrenzt, wobei dem aktiven Rückwirkraum (2) zur Änderung einer Betätigungskraft an der Lenkhandhabe ein Servodruck zuführbar ist,
**dadurch gekennzeichnet, daß**
ein Abschneidventil (8) bzw. Druckbegrenzungsventil mit einer weichen Feder (5) derart versehen ist, daß ein Kolben (4a) des Abschneidventils (8) bzw. des Druckbegrenzungsventils annähernd verzögerungsfrei auf dynamische Oszillationen der Rückwirkraumdrücke reagiert.

15. Hilfskraftlenkung nach Anspruch 14,
**dadurch gekennzeichnet, daß**
Drosselbohrungen (9,10) sowie Steuer- und Dichtkanten (11) des Abschneidventils (8) bzw. des Druckbegrenzungsventils entsprechend der geringen Festigkeit der Feder (5) angeordnet sind.

16. Hilfskraftlenkung nach Anspruch 15,
**dadurch gekennzeichnet, daß**
die Drosselbohrung (9,10) sowie die Steuer- und Dichtkanten (11) derart angeordnet sind, daß zu einem vollständigen Öffnen der Überdruckfunktion ein an die geringere Festigkeit der Feder (5) angepaßter längerer Weg des Kolbens (4a) erforderlich ist.

17. Hilfskraftlenkung nach einem der Ansprüche 14, 15 oder 16,
**dadurch gekennzeichnet, daß**
die Feder (5) gegen einen ersten Öffnungsdruck vorgespannt ist.

18. Hilfskraftlenkung nach einem der Ansprüche 14 bis 17,
**dadurch gekennzeichnet, daß**
die Feder eine Federsteifigkeit von 0,1 bis 2 N/mm, vorzugsweise 0,4 bis 0,6 N/mm, aufweist.

## Claims

1. Power steering system for motor vehicles, having a rotary slide valve which has a reaction piston (1) which delimits an active and a passive reaction chamber (2, 3), it being possible to supply a boost pressure to the active reaction chamber (2) in order to change an actuating force at the steering handle, **characterized in that** a damping piston (4) is connected to the active reaction chamber (2) in order to absorb dynamic oscillations of the reaction pressure.

2. Power steering system according to Claim 1, **characterized in that** the side, remote from the active reaction chamber (2), of the damping piston (4) is stressed counter to atmosphere and/or a spring (5).

3. Power steering system according to Claim 1 or 2, **characterized in that** the damping piston (4) is of damped and/or smooth running configuration.

4. Power steering system according to Claim 1, 2 or 3, **characterized in that** the damping piston (4) is configured as a complete cartridge and is tuned to reaction chamber pressure peaks.

5. Power steering system according to one of Claims 1 to 4, **characterized in that** the side, remote from the active reaction chamber (2), of the damping piston (4) is connected to the passive reaction chamber (3).

6. Power steering system according to one of Claims 1 to 5, **characterized in that** the damping piston (4) has a weak spring (5) whose spring stiffness is preferably between 0.1 and 2 N/mm.

7. Power steering system according to one of Claims 1 to 6, **characterized in that** the damping piston (4) is provided with the functions of a cutoff valve (8) or of a pressure limiting valve.

8. Power steering system according to Claim 7, **characterized in that** the damping piston (4) has restrictor bores (9, 10) and control and sealing edges (11) in accordance with the functions of a cutoff valve (8).

9. Power steering system according to Claim 8, **characterized in that** the restrictor bore (9, 10) and the control and sealing edges (11) are arranged in accordance with the low strength of the spring (5).

10. Power steering system for motor vehicles, having a rotary slide valve which has a reaction piston (1) which delimits an active and a passive reaction chamber (2, 3), it being possible to supply a boost pressure to the active reaction chamber (2) in order to change an actuating force at the steering handle, **characterized in that** the reaction piston (1) has a diaphragm, which is arranged between the active reaction chamber (2) and the passive reaction chamber (3).

11. Power steering system for motor vehicles, having a rotary slide valve which has a reaction piston (1) which delimits an active and a passive reaction chamber (2, 3), it being possible to supply a boost pressure to the active reaction chamber (2) in order to change an actuating force at the steering handle, **characterized in that** a centring piece (6) is arranged in the passive reaction chamber (3) and is connected to the reaction piston (1) by means of a decoupling element (7).

12. Power steering system according to Claim 11, **characterized in that** the decoupling element is configured as a decoupling spring (7).

13. Power steering system according to Claim 11 or 12, **characterized in that** the centring piece (6) is floatingly arranged in the passive reaction chamber (3).

14. Power steering system for motor vehicles, having a rotary slide valve which has a reaction piston (1) which delimits an active and a passive reaction chamber (2, 3), it being possible to supply a boost pressure to the active reaction chamber (2) in order to change an actuating force at the steering handle, **characterized in that** a cutoff valve (8) or pressure limiting valve is provided with a weak spring (5), such that a piston (4a) of the cutoff valve (8) or of the pressure limiting valve reacts almost without delay to dynamic oscillations of the reaction chamber pressures.

15. Power steering system according to Claim 14, **characterized in that** restrictor bores (9, 10) and control and sealing edges (11) of the cutoff valve (8) or of the pressure limiting valve are arranged in accordance with the low strength of the spring (5).

16. Power steering system according to Claim 15, **characterized in that** the restrictor bore (9, 10) and the control and sealing edges (11) are arranged in such a way that relatively long travel, matched to the relatively low strength of the spring (5), of the piston (4a) is required in order to completely open the overpressure function.

17. Power steering system according to one of Claims 14, 15 or 16, **characterized in that** the spring (5) is prestressed counter to a first opening pressure.

18. Power steering system according to one of Claims 14 to 17, **characterized in that** the spring has a spring stiffness of 0.1 to 2 N/mm, preferably 0.4 to 0.6 N/mm.

## Revendications

1. Direction assistée pour véhicules automobiles, comprenant une vanne de distribution rotative, qui présente un piston de réaction (1) qui délimite un espace de réaction actif et passif (2, 3), l'espace de réaction actif (2) pouvant être alimenté en une pression d'asservissement pour faire varier une force d'actionnement au niveau du système de direction,
**caractérisée en ce que**
l'on raccorde à l'espace de réaction actif (2), pour recevoir des oscillations dynamiques de la pression de réaction, un piston d'amortissement (4).

2. Direction assistée selon la revendication 1,
**caractérisée en ce que** le côté du piston d'amortissement (4) détourné de l'espace de réaction actif (2) est contraint par rapport à l'atmosphère et/ou un ressort (5).

3. Direction assistée selon la revendication 1 ou 2,
**caractérisée en ce que** le piston d'amortissement (4) est amorti et/ou est réalisé de manière souple.

4. Direction assistée selon la revendication 1, 2 ou 3,
**caractérisée en ce que** le piston d'amortissement (4) est réalisé sous forme de cartouche complète et est ajusté à des pointes de pression de l'espace de réaction.

5. Direction assistée selon l'une quelconque des revendications 1 à 4,
**caractérisée en ce que** le côté du piston d'amortissement (4) détourné de l'espace de réaction actif (2) est connecté à l'espace de réaction passif (3).

6. Direction assistée selon l'une quelconque des revendications 1 à 5,
**caractérisée en ce que** le piston d'amortissement (4) présente un ressort faible (5) dont la raideur de ressort est de préférence comprise entre 0,1 et 2 N/mm.

7. Direction assistée selon l'une quelconque des revendications 1 à 6,
**caractérisée en ce que** le piston d'amortissement (4) est pourvu des fonctions d'une vanne de coupure (8) ou d'une soupape de limitation de pression.

8. Direction assistée selon la revendication 7,
**caractérisée en ce que** le piston d'amortissement (4) présente des alésages d'étranglement (9, 10) ainsi que des arêtes de commande et d'étanchéité (11) correspondant aux fonctions d'une vanne de coupure (8).

9. Direction assistée selon la revendication 8,
**caractérisée en ce que** l'alésage d'étranglement (9, 10) ainsi que les arêtes de commande et d'étanchéité (11) sont disposés de manière correspondant à la faible raideur du ressort (5).

10. Direction assistée pour véhicules automobiles comprenant une vanne de distribution rotative, qui présente un piston de réaction (1) qui délimite un espace de réaction actif et passif (2, 3), l'espace de réaction actif (2) pouvant être alimenté en une pression d'asservissement pour faire varier une force d'actionnement au niveau du système de direction,
**caractérisée en ce que**
le piston de réaction (1) présente une membrane qui est disposée entre l'espace de réaction actif (2) et l'espace de réaction passif (3).

11. Direction assistée pour véhicules automobiles comprenant une vanne de distribution rotative, qui présente un piston de réaction (1) qui délimite un espace de réaction actif et passif (2, 3), l'espace de réaction actif (2) pouvant être alimenté en une pression d'asservissement pour faire varier une force d'actionnement au niveau du système de direction,
**caractérisée en ce que**
une pièce de centrage (6) est disposée dans l'espace de réaction passif (3) et est connectée au piston de réaction (1) au moyen d'un organe de découplage (7).

12. Direction assistée selon la revendication 11,
**caractérisée en ce que** l'organe de découplage est réalisé sous forme de ressort de découplage (7).

13. Direction assistée selon la revendication 11 ou 12,
**caractérisée en ce que** la pièce de centrage (6) est disposée de manière flottante dans l'espace de réaction passif (3).

14. Direction assistée pour véhicules automobiles comprenant une vanne de distribution rotative, qui présente un piston de réaction (1) qui délimite un espace de réaction actif et passif (2, 3), l'espace de réaction actif (2) pouvant être alimenté en une pression d'asservissement pour faire varier une force d'actionnement au niveau du système de direction,
**caractérisée en ce qu'**une
vanne de coupure (8) ou une vanne de limitation de pression est pourvue d'un ressort faible (5), de telle sorte qu'un piston (4a) de la vanne de coupure (8) ou de la vanne de limitation de pression réagisse pratiquement sans retard à des oscillations dynamiques des pressions des espaces de réaction.

15. Direction assistée selon la revendication 14,
**caractérisée en ce que** des alésages d'étranglement (9, 10) ainsi que des arêtes de commande et d'étanchéité (11) de la vanne de coupure (8) ou de la vanne de limitation de pression sont disposés de manière correspondant à la faible raideur du ressort (5).

16. Direction assistée selon la revendication 15,
**caractérisée en ce que** l'alésage d'étranglement (9, 10) ainsi que les arêtes de commande et d'étanchéité (11) sont disposés de telle sorte qu'une course relativement longue du piston (4a) adaptée à la faible raideur du ressort (5) soit nécessaire pour une ouverture complète de la fonction de surpression.

17. Direction assistée selon l'une quelconque des revendications 14, 15 ou 16,
**caractérisée en ce que** le ressort (5) est précontraint contre une première pression d'ouverture.

18. Direction assistée selon l'une quelconque des revendications 14 à 17,
**caractérisée en ce que** le ressort présente une raideur de ressort de 0,1 à 2 N/mm, de préférence de 0,4 à 0,6 N/mm.
